# EUROPEAN PATENT SPECIFICATION

(11) **EP 3 433 893 B1**
(45) Date of publication and mention of the grant of the patent: **08.12.2021**
(21) Application number: 17770944.1
(22) Date of filing: 21.03.2017
(51) Int. Cl.: H01M 4/62, H01M 4/38, H01M 4/50, H01M 10/26, H01M 6/04, H01M 10/28, H01M 4/02

(54) **ALKALINE BATTERY**
ALKALIBATTERIE
PILE ALCALINE

(30) Priority: 21.03.2016 US 201662311113 P
(43) Date of publication of application: 30.01.2019
(73) Proprietor: Energizer Brands, LLC, St. Louis, Missouri 63141 (US)
(72) Inventor: FAN, Daniel, Westlake, Ohio 44145 (US); DINGER, Walter T., Brunswick, Ohio 44212 (US); JOHNSON, Robert P., Lakewood, Ohio 44107 (US); LI, Weihong, Westlake, Ohio 44145-0000 (US); HEUN, Robert W., Brecksville, Ohio 44141 (US)
(74) Representative: Ullrich & Naumann PartG mbB
(86) International application number: PCT/US2017/023312
(87) International publication number: WO 2017/165350

(56) References cited:
- US-A- 5 401 590
- US-A1- 2009 053 595
- US-A1- 2009 226 815
- US-A1- 2011 274 982
- US-A1- 2014 183 770

## Description

### FIELD

Various embodiments relate to an improved method for manufacturing alkaline (e.g., zinc-manganese dioxide) electrochemical cells. In particular, a mixture of gelling agents is employed to better control the manufacturing conditions and to improve the overall performance of the resulting battery.

### BACKGROUND

Gelled negative electrodes (also referred to as anodes herein) are created from a mixture of particulate or powdered zinc, an aqueous electrolyte solution including an alkaline component (e.g., potassium hydroxide), a gelling agent (also referred to as a thickening agent and/or a binder) and a variety of other inactive additives intended to enhance the electrode's gassing performance, stability, conductivity and the like. Such gelled negative electrodes are well known in the art, as evidenced by United States patents 4,175,052; 5,464,709; 6,022,639; and 6,528,210. Notwithstanding the established history of gelled negative electrodes for alkaline batteries, relatively recent emphasis on the elimination of added mercury to such electrodes renders the disclosed electrode formulations of many patents prior to the '709 patent dubious.

Polymerization and thickening of these gelling agents must occur at a specific viscosity so as to suspend the particulate/powdered zinc within the negative electrode and without zinc sedimenting in the alkaline electrolyte, which results in degraded battery performance. However, increased amounts of gelling agent to avoid sedimentation can increase cell internal resistance, also degrading discharge characteristics for the battery. The amount of gelling agent must also be balanced against cost and volumetric concerns (insofar as most batteries come in standardized sizes in which the volume of any inactive components represents volume that is not being utilized by potentially active materials). In short, it is desirable to select a gelling agent that effectively suspends the anode material relying on the smallest possible amount of gelling agent.

Particularly since the advent of no-mercury added negative electrode formulations, cross-linked poly(meth)acrylic acid gelling agents have found wide-spread use, including cross-linked polyacrylate polymers sold under the Carbopol^{®} 940 tradename by Lubrizol Corporation of Wickliffe, Ohio, USA (hereafter, "Carbopol"). As recognized in United States patent 8,080,339, one negative aspect of Carbopol is its apparent reliance on benzene as a polymerization solvent. Consequently, some various proposals have been made for the use of alternative gelling agents.

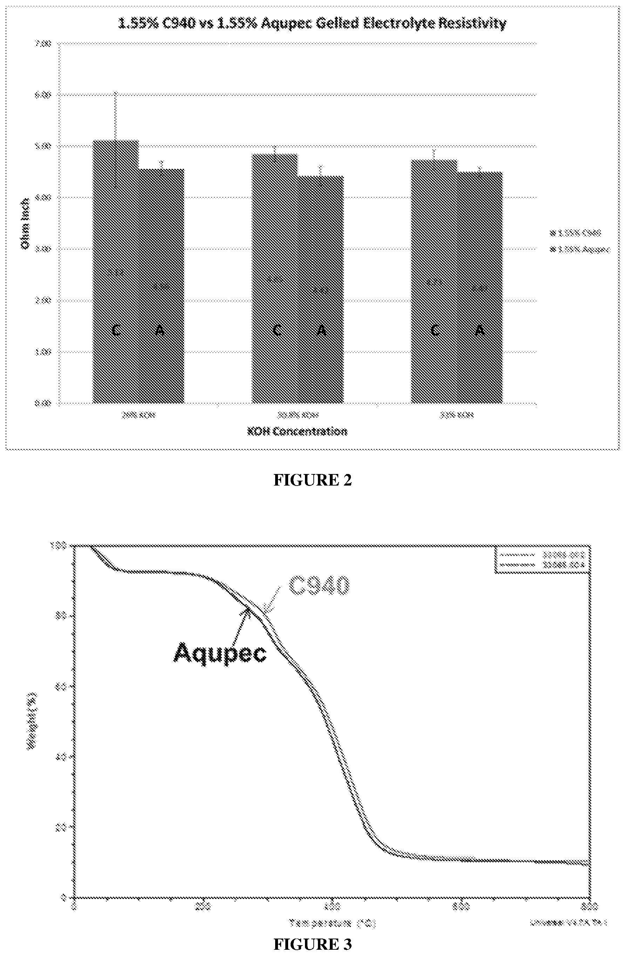

Foremost, the '339 patent proposed the use of a non-benzene solvent as the polymerization solvent for the gelling agent, such as a low-polar or non-polar hydrocarbon-based solvent including HV-505E sold by Sumitomo Seika Chemicals Co. Ltd. of Osaka, Japan. As indicated at col. 2, lines 41-45, 0.3 to 0.5 wt.% more of such non-benzene gelling agents must be used in comparison to benzene containing agents in order to create an appropriate viscosity for the negative electrode. Figure 2 clarifies that the means of adjusting the viscosity to the desired range was simply to adjust the amount of a single gelling agent provided to the negative electrode. The inclusion of zinc powders of a particular BET surface area (from 0.025 m²/g to 0.045 m²/g) in the claims at least implies a further interaction between the zinc powder and the gelling agent itself in order to achieve the necessary viscosity and concomitant properties required for the final, gelled negative electrode.

United States Patent 5,401,590 discloses carboxymethyl cellulose or crosslinked acrylic acid copolymers as potential gelling agents, including Carbopol and Polygel 4P sold by Sigma (now known as 3V Group of Bergamo, Italy). Starch graft copolymers such as WATER-LOCK A-221 starch-graft copolymer of polyacrylic acid and polyacrylamide from Grain Processing Co., and alkali hydrolyzed polyacrylonitrile such as WATER-LOCK A 400 from Grain Processing Co. are also disclosed as additives or alternatives to the crosslinked acrylic acid polymers. Further relevant prior art is disclosed in the documents US 2009/053595 Al, US 2011/274982 Al, US 2014/183770 A1 and US 2009/226815 Al.

Methods and materials to create a polymerized gel with zinc and/or other additives sufficiently suspended therein is needed. In particular, the gelled anode must have the desired viscosity, both for the final end product and in a manner that sufficiently enables manufacturing while maintaining battery performance and affording additional cell design flexibility.

The following description and the drawings disclose various illustrative aspects. Some improvements and novel aspects may be expressly identified, while others may be apparent from the description and drawings.

### BRIEF SUMMARY

The invention is defined by the appended claims.

Various embodiments are directed to an electrochemical cell. The electrochemical cell comprises a cylindrical housing having a height larger than a diameter; an aqueous alkaline electrolyte; a positive electrode having a nominal voltage of 1.5 volts and an active material including manganese dioxide; and a negative electrode comprising particular zinc and a gelling agent mixture, said gelling agent mixture comprising at least two components having a predetermined difference in resistivity, wherein the resistivity of the first component is greater than the resistivity of the second component, said resistivity being measured for each component prior to being mixed or provided to the cell; and wherein the first component and the second component are blended in a ratio of the first component relative to the second component of between 10:90 and 50:50 by volume.

Moreover, certain embodiments are directed to a method for making an alkaline battery. The method comprising: selecting a first gelling agent having a first resistivity; selecting a second gelling agent having a second resistivity that is less than the first resistivity; mixing the first and second gelling agents with particulate zinc to create a negative electrode mixture, wherein the first and second gelling agents are provided in a ratio of the first gelling agent relative to the second gelling agent of between 10:90 and 50:50 by volume; providing an aqueous alkaline electrolyte to create a cross-linked negative electrode; and providing a positive electrode comprising manganese dioxide and disposing the positive electrode and the negative electrode in a cylindrical housing to form a battery.

Certain embodiments are directed to an electrochemical cell. The electrochemical cell may comprise a cylindrical housing having a height larger than a diameter; an aqueous alkaline electrolyte comprising potassium hydroxide; a positive electrode having a nominal voltage of 1.5 volts and an active material comprising manganese dioxide; a negative electrode having particulate zinc and a gelling agent mixture, said gelling agent mixture comprising a first gelling agent consisting essentially of a cross-linked polyacrylate polymer provided between 10 wt.% and 50 wt.% of the mixture and a second gelling agent consisting essentially of a cross-linked polyacrylate polymer provided between 50 wt.% and 90 wt.% of the mixture; and wherein a difference in resistivity of the first gelling agent and the second gelling agent is between 2% and 15%, said difference in resistivity being measured individually for the first and second gelling agents prior to being mixed and provided to the cell and with the difference expressed as a function of the gelling agent with lesser resistivity. For example, the aqueous alkaline electrolyte may have a potassium hydroxide concentration of about 26% and the difference in resistivity of the first gelling agent and the second gelling agent is between about 9% and 15%. As yet another example, the aqueous alkaline electrolyte may have a potassium hydroxide concentration of about 30% and the difference in resistivity of the first gelling agent and the second gelling agent is between about 6% and 12%. As yet another example, the aqueous alkaline electrolyte may have a potassium hydroxide concentration of about 33% and the difference in resistivity of the first gelling agent and the second gelling agent is between about 2% and 8%.

### BRIEF DESCRIPTION OF THE DRAWINGS

The accompanying drawings illustrate various systems, apparatuses, devices and related methods, in which like reference characters refer to like parts throughout, and in which:
FIGURE 1 illustrates an elevational view, in cross-section, of a battery and electrochemical cell according to certain embodiments.
FIGURE 2 is a comparison of the resistivity of gelling agents associated with certain embodiments at varying levels of KOH concentration.
FIGURE 3 is a thermogravimetric analysis and comparison of gelling agents associated with certain embodiments.

### DETAILED DESCRIPTION

Reference will now be made to exemplary embodiments, examples of which are illustrated in the accompanying drawings. It is to be understood that other embodiments may be utilized and structural and functional changes may be made. Moreover, features of the various embodiments may be combined or altered. As such, the following description is presented by way of illustration only and should not limit in any way the various alternatives and modifications that may be made to the illustrated embodiments. In this disclosure, numerous specific details provide a thorough understanding of the subject disclosure. It should be understood that aspects of this disclosure may be practiced with other embodiments not necessarily including all aspects described herein, etc.

As used herein, the words "example" and "exemplary" means an instance, or illustration. The words "example" or "exemplary" do not indicate a key or preferred aspect or embodiment. The word "or" is intended to be inclusive rather than exclusive, unless context suggests otherwise. As an example, the phrase "A employs B or C," includes any inclusive permutation (e.g., A employs B; A employs C; or A employs both B and C). As another matter, unless context suggest otherwise, the articles "a" and "an" are generally intended to mean "one or more" and the use of plural may be exemplary rather than mandatory.

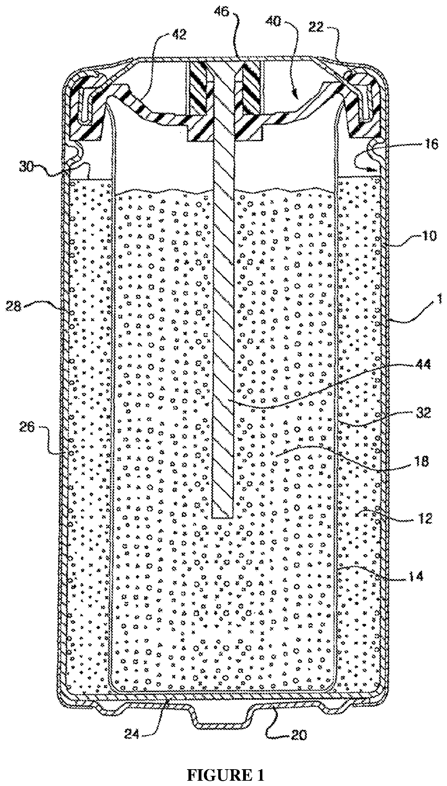

Various embodments will be better understood by reference to FIG. 1 which shows a cylindrical cell 1 in elevational cross-section, with the cell having a nail-type or bobbin-type construction and dimensions comparable to a conventional LR6 (AA) size alkaline cell, which is particularly well-suited to certain embodiments. However, it is to be understood that cells according various embodiments can have other sizes and shapes, such as a prismatic or button-type shape; and electrode configurations, as known in the art. The materials and designs for the components of the electrochemical cell illustrated in FIG. 1 are for the purposes of illustration, and other materials and designs may be substituted.

In FIG. 1, an electrochemical cell 1 is shown, including a container or can 10 having a closed bottom end 24, a top end 22 and sidewall 26 therebetween. The closed bottom end 24 includes a terminal cover 20 including a protrusion. The can 10 has an inner wall 16. In the embodiment, a positive terminal cover 20 is welded or otherwise attached to the bottom end 24. In one embodiment, the terminal cover 20 can be formed with plated steel for example with a protruding nub at its center region. Container 10 can be formed of a metal, such as steel, preferably plated on its interior with nickel, cobalt and/or other metals or alloys, or other materials, possessing sufficient structural properties that are compatible with the various inputs in an electrochemical cell. A label 28 can be formed about the exterior surface of container 10 and can be formed over the peripheral edges of the positive terminal cover 20 and negative terminal cover 46, so long as the negative terminal cover 46 is electrically insulated from container 10 and positive terminal 20.

Disposed within the container 10 are a first electrode 18 and second electrode 12 with a separator 14 therebetween. First electrode 18 is disposed within the space defined by separator 14 and closure assembly 40 secured to open end 22 of container 10. Closed end 24, sidewall 26, and closure assembly 40 define a cavity in which the electrodes of the cell are housed.

Closure assembly 40 comprises a closure member 42 such as a gasket, a current collector 44 and conductive terminal 46 in electrical contact with current collector 44. Closure member 42 preferably contains a pressure relief vent that will allow the closure member to rupture if the cell's internal pressure becomes excessive. Closure member 42 can be formed from a polymeric or elastomer material, for example Nylon-6,6, an injection-moldable polymeric blend, such as polypropylene matrix combined with poly(phenylene oxide) or polystyrene, or another material, such as a metal, provided that the current collector 44 and conductive terminal 46 are electrically insulated from container 10 which serves as the current collector for the second electrode 12. In the embodiment illustrated, current collector 44 is an elongated nail or bobbin-shaped component. Current collector 44 is made of metal or metal alloys, such as copper or brass, conductively plated metallic or plastic collectors or the like. Other suitable materials can be utilized. Current collector 44 is inserted through a preferably centrally located hole in closure member 42.

First electrode 18 is preferably a negative electrode or anode. The negative electrode includes a mixture of one or more active materials, an electrically conductive material, solid zinc oxide, and a surfactant. The negative electrode can optionally include other additives, for example a binder or a gelling agent, and the like.

Zinc is the preferred main active material for the negative electrode of certain embodiments. Preferably, the volume of zinc utilized in the negative electrode is sufficient to maintain a desired particle-to-particle contact and a desired anode to cathode (A:C) ratio. The volume of zinc in the negative electrode can range from about 20 to about 32 volume percent, more preferably about 24 to about 30 volume percent. Notably, the solids packing of the negative electrode mix remains relatively unchanged from previously known designs, despite a lower overall concentration of zinc, because the relative volume contributions by the zinc and the zinc oxide are similar. The volume percent zinc is determined by dividing the volume of zinc by the volume of the negative electrode just prior to dispensing the negative electrode into the separator lined cavity as will be explained below. The volume percent zinc must be determined before dispensing the negative electrode into the separator basket because a portion of the electrolyte incorporated into the negative electrode migrates into the separator and cathode as soon as the negative electrode is inserted into the cavity defined by the separator. The volume percent zinc is based on the density of zinc (7.13 g/cc), the volume of the negative electrode mix and the weight of the negative electrode mix.

Zinc suitable for use in various embodiments may be purchased from a number of different commercial sources under various designations, such as BIA 100, BIA 115. Umicore, S. A., Brussels, Belgium is an example of a zinc supplier. Zinc alloys may be adjusted to reduce negative electrode gassing in cells and to maintain test service results.

The amount of zinc present in the negative electrode ranges generally from about 62 to about 72 weight percent, desirably from about 64 to about 70 weight percent, and preferably about 67 to about 69 weight percent based on the total weight of the negative electrode (i.e., all components including zinc, additives, gelling agent and electrolyte).

One such anode additive may include solid zinc oxide. A higher concentration of solid zinc oxide will increase high rate service, such as DSC service, but also increase negative electrode viscosity and yield stress which can create negative electrode dispensing problems. Lower concentrations of solid zinc oxide will decrease high rate DSC service.

Another potential anode additive may be one or more surfactants. These surfactants may be either a nonionic or anionic surfactant, or a combination thereof is present in the negative electrode. The addition of surfactant(s) is believed to increase the surface charge density of the solid zinc oxide, lower anode resistance as indicated above and/or aid in forming a more porous discharge product when the surfactant adsorbs on solid zinc oxide (if present). A preferred surfactant may be DISPERBYK-190 from BYK-Chemie GmbH of Wesel, Germany.

The negative electrode can be formed in a number of different ways as known in the art. For example, the negative electrode components can be dry blended and added to the cell, with alkaline electrolyte being added separately or, as in a preferred embodiment, a pre-gelled negative electrode process is utilized.

Other components which may be optionally present within the negative electrode include, but are not limited to, gassing inhibitors, organic or inorganic anticorrosive agents, plating agents, binders or other surfactants. Examples of gassing inhibitors or anticorrosive agents can include indium salts, such as indium hydroxide, perfluoroalkyl ammonium salts, alkali metal sulfides, etc. In one embodiment, dissolved zinc oxide is present preferably via dissolution in the electrolyte, in order to improve plating on the bobbin or nail current collector and to lower negative electrode shelf gassing.

In various embodiments a particular gelling agent, Aqupec HV-505E (hereafter, "Aqupec"), improved high rate services (e.g., as observed during the ANSI digital still camera test). It is believed and has been determined that this improvement can be attributed to the fact that this gelling agent creates less cross-linking in the gel in comparison to conventional gelling agents such as Carbopol and, as a consequence and/or as a further contributing factor, affords Aqupec with a lower resistivity as compared to Carbopol. However, as implied in the '339 patent, an anode made with this—or any gelling agent producing less cross-linking—may be difficult to process due to lower anode viscosity and KOH separations (i.e., sedimentation of the zinc). Aqupec also presents challenges owing to its comparatively more volatile nature, and its advantage of being benzene-free have been documented (as noted above).

Only one gelling agent was normally preferred to simplify manufacturing and insure consistency of the anode. However, anode processibility may be improved by blending a low resisitivity gelling agent, such as Aqupec, with a higher cross-linking gelling agent, such as Carbopol. The anode processibility may be improved and KOH separation issue may be largely eliminated with such a blended gelling agent composition. Surprisingly, the improved high rate service is maintained even with the inclusion of significant levels of a generally lower performing gelling agent within the blend. Although the resulting mixture includes a portion of gelling agents made from benzene, the overall reliance on benzene is reduced. The blended gelling agent also exhibits preferred levels of cross-linking that are lower than that shown by Carbopol alone, yet still sufficiently close to those of Aqupec as to retain its benefits.

The blend of differing gelling agents also affords greater flexibility in cell design parameters. In particular, it has been determined that the resistivity of Carbopol was correlated to the concentration of KOH in the cell. As a result, a cell designer seeking to realize the benefits of lower gelling agent resistivity would have previously needed to plan for greater KOH concentrations or explore the use of alternative gelling agents, which might give rise to processing and manufacturing issues like those associated with Aqupec. However, it has been further observed that Aqupec does not appear to experience the same correlation between resistivity and KOH concentration, as illustrated in Figure 2 in which C represents measurements on Carbopol and A represents measurements on Aqupec. By properly balancing and blending a lower resistivity and lower cross-linking gelling agent with a more stable, more highly cross-linked gelling agent, it is possible to leverage the attributes of both agents.

In some embodiments, the gelling agents are blended at an even 1:1 ratio, by weight or by volume (note that there should not be an appreciable difference between the two). In other embodiments, up to 30%, 40%, 50%, 60%, 70%, 80%, and 90%, by weight or volume, of the gelling agent should be of the type similar to Aqupec, with the remainder being a more conventional gelling agent.

While Aqupec is identified as a particular type of gelling agent amenable to certain embodiments, it is believed that any agent exhibiting its salient qualities may suffice. Specifically, these agents may be characterized as having less cross-linkages in comparison to Carbopol 940. More ideally, the blend includes gelling agents of essentially the same chemical composition (or at least the same active composition) but exhibiting significant differences in cross-linking. A significant difference would be necessarily comparative in nature, with one gelling agent exhibiting at least 5%, 10%, 15%, or more cross-linking in comparison to the other.

In the same manner, the gelling agents may also be selected by comparing specific traits, such as resistivity, resistivity in comparison to KOH concentration, viscosity and/or cross-linking. In particular, each of these traits may be measured for the preferred agents noted above and then used to select alternatives displaying similar disparities in one or all of these categories. Selection may also be based on a combination of benzene and non-benzene based agents.

By way of example rather than limitation, gelling agents according to certain embodiments may be selected to have a difference in resistivity of about 12.3% at 26.0% KOH, 9.73% at 30.8% KOH and 5.35% at 33% KOH, with all percentages expressed on the basis of the lower resisitivity agent. Further ranges in certain embodiments (depending upon the KOH concentration) may include between 9 and 15%, between 6 and 12%, and between 2 and 8%.

Resistivity of the gelling agent and/or the gelled electrode mixture may be measured using a fixture with a standardized dimensions. The fixture is filled with agent/mix so that air is permitted to escape and electrical contacts are then inserted at fixed distances. Impedance scans are performed on the materials of interest in the same, repeated manner, and resistivity can then be calculated on the basis of the area of the material in the fixture.

Figure 3 depicts a thermogravimetric comparative analysis of Carbopol (noted as C940) and Aqupec. The data and trends shown in this figure may encompass certain embodiments.

As noted above, Aqupec is preferred for the first gelling agent and Carbopol is preferred for the second gelling agent, although other similar materials may be used. Significantly, both gelling agents should be cross-linked polyacrylate polymers. Rather than adjust the total mass of gelling agent to achieve desired properties, these compositions may be blended to achieve the desired processing and battery performance traits.

The gelling agents may be mixed in situ or pre-blended prior to introduction to the cell/manufacturing operation.

Second electrode 12, also referred to herein as the positive electrode or cathode, preferably includes manganese dioxide as the electrochemically active material. Manganese dioxide is present in an amount generally from about 80 to about 86 weight percent and preferably from about 81 to 85 weight percent by weight based on the total weight of the positive electrode, i.e., manganese dioxide, conductive material, positive electrode electrolyte and additives such as barium sulfate. Manganese dioxide is commercially available as natural manganese dioxide (NMD), chemical manganese dioxide (CMD), or electrolytic manganese dioxide (EMD). Suppliers of EMD include Kerr-McGee Chemical Corporation of Oklahoma City, Okla.; Tosoh Corporation of Tokyo, Japan, Delta EMD of Newcastle, Australia and Erachem Comilog, Inc. of Baltimore, Md.

The positive electrode is formed by combining and mixing desired components of the electrode followed by dispensing a quantity of the mixture into the open end of the container and then using a ram to mold the mixture into a solid tubular configuration that defines a cavity within the container in which the separator 14 and first electrode 18 are later disposed.

Second electrode 12 has a ledge 30 and an interior surface 32 as illustrated in FIG. 1. Alternatively, the positive electrode may be formed by pre-forming a plurality of rings from the mixture comprising manganese dioxide and then inserting the rings into the container to form the tubular-shaped second electrode. The cell shown in FIG. 1 would typically include 3 or 4 rings.

The positive electrode can include other components such as a conductive material, for example graphite, that when mixed with the manganese dioxide provides an electrically conductive matrix substantially throughout the positive electrode. Conductive material can be natural, i.e., mined, or synthetic, i.e., manufactured. In one embodiment, the cells of certain embodiments include a positive electrode having an active material or oxide to carbon ratio (O:C ratio) that ranges from about 12 to about 14. Too high of an oxide to carbon ratio decreases the container to cathode resistance, which affects the overall cell resistance and can have a potential effect on high rate tests, such as the DSC test, or higher cut-off voltages. Furthermore the graphite can be expanded or non-expanded. Suppliers of graphite for use in alkaline batteries include Timcal America of Westlake, Ohio; Superior Graphite Company of Chicago, Ill.; and Lonza, Ltd. of Basel, Switzerland. Conductive material is present generally in an amount from about 5 to about 10 weight percent based on the total weight of the positive electrode. Too much graphite can reduce manganese dioxide input, and thus cell capacity; too little graphite can increase container to cathode contact resistance and/or bulk cathode resistance. An example of an additional additive is barium sulfate (BaSO₄), which is commercially available from Bario E. Derivati S.p.A. of Massa, Italy. The barium sulfate is present in an amount generally from about 1 to about 2 weight percent based on the total weight of the positive electrode. Other additives can include, for example, barium acetate, titanium dioxide, binders such as coathylene, and calcium stearate.

In one embodiment, the positive electrode component, such as the manganese dioxide, conductive material, and barium sulfate are mixed together to form a homogeneous mixture. During the mixing process, an alkaline electrolyte solution, such as from about 37% to about 40% KOH solution, is evenly dispersed into the mixture thereby insuring a uniform distribution of the solution throughout the positive electrode materials. The mixture is then added to the container and molded utilizing a ram. Moisture within the container and positive electrode mix before and after molding, and components of the mix are preferably optimized to allow quality positive electrodes to be molded. Mix moisture optimization allows positive electrodes to be molded with minimal splash and flash due to wet mixes, as well as spalling and excessive tool wear due to dry mixes, with optimization helping to achieve a desired high cathode weight. Moisture content in the positive electrode mixture can affect the overall cell electrolyte balance and has an impact on high rate testing.

One of the parameters utilized by cell designers characterizes cell design as the ratio of one electrode's electrochemical capacity to the opposing electrode's electrochemical capacity, such as the anode (A) to cathode (C) ratio, i.e., A:C ratio. For an LR6 type alkaline primary cell of various embodiments that utilizes zinc in the negative electrode or anode and manganese dioxide in the positive electrode or cathode, the A:C ratio is preferably greater than 1.32:1, desirably greater than 1.34:1, and preferably 1.36:1 for impact molded positive electrodes. The A:C ratio for ring molded positive electrodes can be lower, such as about 1.2:1.

Separator 14 is provided in order to separate first electrode 18 from second electrode 12. Separator 14 maintains a physical dielectric separation of the positive electrode's electrochemically active material from the electrochemically active material of the negative electrode and allows for transport of ions between the electrode materials. In addition, the separator acts as a wicking medium for the electrolyte and as a collar that prevents fragmented portions of the negative electrode from contacting the top of the positive electrode. Separator 14 can be a layered ion permeable, non-woven fibrous fabric. A typical separator usually includes two or more layers of paper. Conventional separators are usually formed either by pre-forming the separator material into a cup-shaped basket that is subsequently inserted under the cavity defined by second electrode 12 and closed end 24 and any positive electrode material thereon, or forming a basket during cell assembly by inserting two rectangular sheets of separator into the cavity with the material angularly rotated 90.degree. relative to each other. Conventional pre-formed separators are typically made up of a sheet of non-woven fabric rolled into a cylindrical shape that conforms to the inside walls of the second electrode and has a closed bottom end.

### EXAMPLE 1

Three lots of identical cell designs (D and AA sizes) were manufactured, with the only variable being the amount and type of gelling agent used in the anode. Lot 1 utilized a routine gelling agent known in the art (Carbopol), lot 2 utilized only benzene-free/low-viscosity/low resistivity gelling agent (Aqupec) and lot 3 was constructed with a 50/50 mixture of both gelling agents according to certain embodiments.

Cells from each of these lots were tested according to standard service testing regimens published by the International Electrotechnical Committee (IEC) and/or the American National Standards Institute (ANSI). The results published below are percentages relative to the performance of lot 1.

| **Test** | **Lot 1** | **Lot 2** | **Lot 3** |
|---|---|---|---|
| 3.3 ohm LIF | 100 | 100 | 102 |
| 3.9 ohm 1 h/d | 100 | 98 | 98 |
| 100 mA 1 h/d | 100 | 101 | 101 |
| 24 ohm | 100 | 97 | 97 |
| 43 ohm | 100 | 99 | 100 |
| ***Low-Moderate drain average*** | ***100*** | ***99*** | ***100*** |
| Digital Still Camera | 100 | 120 | 127 |
| 1000 mA photo | 100 | 115 | 112 |
| 250 mA 1 h/d | 100 | 99 | 97 |
| 500 mA toothbrush | 100 | 99 | 100 |
| ***High tech average*** | ***100*** | ***108*** | ***109*** |
| ***Weighted ANSI average*** | ***100*** | ***101*** | ***101*** |

### EXAMPLE 2

Two lots of identical cell designs (AA sizes) were manufactured, with the only variable being the amount and type of gelling agent used in the anode. Lot 1 utilized benzene-based gelling agent as was known in the prior art, lot 2 was constructed with a 78/22 mixture (Aqupec/Carbopol) of gelling agents according to certain embodiments.

Cells from each of these lots were tested according to standard service testing regimens published by the International Electrotechnical Committee (IEC) and/or the American National Standards Institute (ANSI). The results published below are percentages relative to the performance of lot 1.

| **Test** | **Lot 1** | **Lot 2** |
|---|---|---|
| 50 mA 1h/8h | 100 | 99 |
| 3.9 ohm LIF | 100 | 99 |
| 3.9 ohm 1 h/d | 100 | 100 |
| 100 mA 1 h/d | 100 | 99 |
| 250 mA 1 h/d | 100 | 100 |
| ***Low-Moderate drain average*** | ***100*** | ***99*** |
| Digital Still Camera | 100 | 110 |
| 750 mA Grooming Test | 100 | 114 |
| ***High tech average*** | ***100*** | ***112*** |
| ***Straight ANSI average*** | ***100*** | ***103*** |

The foregoing description identifies various non-limiting embodiments of an alkaline battery. Modifications may occur to those skilled in the art and to those who may make and use batteries according to the disclosure provided herein. The disclosed embodiments are merely for illustrative purposes and not intended to limit the scope of the disclosure or the subject matter set forth in the claims.

## Claims

1. An electrochemical cell comprising:
a cylindrical housing having a height larger than a diameter;
an aqueous alkaline electrolyte;
a positive electrode having a nominal voltage of 1.5 volts and an active material including manganese dioxide;
a negative electrode comprising particulate zinc and a gelling agent mixture, said gelling agent mixture comprising at least two components having a predetermined difference in resistivity, wherein the resistivity of the first component is greater than the resistivity of the second component, said resistivity being measured for each component prior to being mixed or provided to the cell; and
wherein the first component and the second component are blended in a ratio of the first component relative to the second component of between 10:90 and 50:50 by volume.

2. A cell according to claim 1, wherein the difference in resistivity between the components is between 2% and 15%, as expressed as a function of the component having the lower resistivity.

3. A cell according to either of claim 1 or claim 2, wherein both components are cross-linked polyacrylate polymers.

4. A cell according to claim 1, wherein at least one of the components comprises a cross-linked polyacrylate polymer.

5. A cell according to claim 1, wherein at least one component is formed utilizing a benzene solvent.

6. A cell according to either of claim 1 or claim 5, wherein at least one component is formed utilizing a benzene-free solvent.

7. A method for making an alkaline battery comprising:
selecting a first gelling agent having a first resistivity;
selecting a second gelling agent having a second resistivity that is less than the first resistivity;
mixing the first and second gelling agents with particulate zinc to create a negative electrode mixture, wherein the first and second gelling agents are provided in a ratio of the first gelling agent relative to the second gelling agent of between 10:90 and 50:50 by volume;
providing an aqueous alkaline electrolyte to create a cross-linked negative electrode; and
providing a positive electrode comprising manganese dioxide and disposing the positive electrode and the negative electrode in a cylindrical housing to form a battery.

8. A method according to claim 7, wherein the first resistivity is between 2% and 15% in comparison to the second resistivity.

9. A method according to claim 8, wherein the first gelling agent is a cross-linked polyacrylate polymer.

10. A method according to claim 7, wherein the first and second gelling agents are blended together prior to mixing with the particulate zinc.

11. A method according to either of claim 7 or claim 10, wherein the first and second gelling agents are cross-linked polyacrylate polymers.

12. An electrochemical cell comprising:
a cylindrical housing having a height larger than a diameter;
an aqueous alkaline electrolyte comprising potassium hydroxide;
a positive electrode having a nominal voltage of 1.5 volts and an active material comprising manganese dioxide;
a negative electrode having particulate zinc and a gelling agent mixture, said gelling agent mixture comprising a first gelling agent consisting essentially of a cross-linked polyacrylate polymer provided between 10 wt.% and 50 wt.% of the mixture and a second gelling agent consisting essentially of a cross-linked polyacrylate polymer provided between 50 wt.% and 90 wt.% of the mixture; and
wherein a difference in resistivity of the first gelling agent and the second gelling agent is between 2% and 15%, said difference in resistivity being measured individually for the first gelling agent and the second gelling agent prior to being mixed and provided to the cell and with the difference expressed as a function of the gelling agent with lesser resistivity.

13. The cell according to claim 12, wherein the aqueous alkaline electrolyte has a potassium hydroxide concentration of 26% and the difference in resistivity of the first gelling agent and the second gelling agent is between 9% and 15% or wherein the aqueous alkaline electrolyte has a potassium hydroxide concentration of 30% and the difference in resistivity of the first gelling agent and the second gelling agent is between 6% and 12% or wherein the aqueous alkaline electrolyte has a potassium hydroxide concentration of 33% and the difference in resistivity of the first gelling agent and the second gelling agent is between 2% and 8%.

14. The cell according to claim 12, wherein the first and second gelling agents, upon individual thermogravimetric analysis prior to mixing and between ambient temperature and 600 degrees Celsuis, have similarly-shaped themogravimetric curves with 5% or less difference between observed data points at any given temperature on the curves.

## Patentansprüche

1. Elektrochemische Zelle, umfassend:
ein zylindrisches Gehäuse, dessen Höhe größer ist als dessen Durchmesser;
einen wässrigen alkalischen Elektrolyten;
eine positive Elektrode, die eine Nennspannung von 1,5 Volt und ein aktives Material aufweist, das Mangandioxid enthält;
eine negative Elektrode, die partikelförmiges Zink und ein Geliermittelgemisch umfasst, wobei das Geliermittelgemisch mindestens zwei Komponenten aufweist, die eine vorbestimmte Differenz in ihrem spezifischen Widerstand aufweisen, wobei der spezifische Widerstand einer ersten Komponente größer ist als der spezifische Widerstand einer zweiten Komponente, wobei der spezifische Widerstand für jede Komponente gemessen wird, bevor sie gemischt oder der Zelle bereitgestellt wird; und
wobei die erste Komponente und die zweite Komponente in einem Volumenverhältnis der ersten Komponente relativ zu der zweiten Komponente von zwischen 10:90 und 50:50 vermengt werden.

2. Zelle nach Anspruch 1, wobei die Differenz im spezifischen Widerstand zwischen den Komponenten zwischen 2% und 15% beträgt, ausgedrückt als eine Funktion derjenigen Komponente, die den niedrigeren spezifischen Widerstand aufweist.

3. Zelle nach Anspruch 1 oder Anspruch 2, wobei beide Komponenten vernetzte Polyacrylatpolymere sind.

4. Zelle nach Anspruch 1, wobei mindestens eine der Komponenten ein vernetztes Polyacrylatpolymer umfasst.

5. Zelle nach Anspruch 1, wobei mindestens eine Komponente unter Verwendung eines Benzollösungsmittels gebildet wird.

6. Zelle nach Anspruch 1 oder Anspruch 5, wobei mindestens eine Komponente unter Verwendung eines benzolfreien Lösungsmittels gebildet wird.

7. Verfahren zur Herstellung einer Alkalibatterie, umfassend:
Auswählen eines ersten Geliermittels, das einen ersten spezifischen Widerstand aufweist;
Auswählen eines zweiten Geliermittels, das einen zweiten spezifischen Widerstand aufweist, der geringer ist als der erste spezifische Widerstand;
Vermischen der ersten und zweiten Geliermittel mit partikelförmigem Zink, um ein negatives Elektrodengemisch zu erzeugen, wobei die ersten und zweiten Geliermittel in einem Volumenverhältnis des ersten Geliermittels relativ zu dem zweiten Geliermittel von zwischen 10:90 und 50:50 bereitgestellt werden;
Bereitstellen eines wässrigen alkalischen Elektrolyten, um eine vernetzte negative Elektrode zu erzeugen; und
Bereitstellen einer Mangandioxid umfassenden positiven Elektrode und Anordnen der positiven Elektrode und der negativen Elektrode in einem zylindrischen Gehäuse, um eine Batterie zu bilden.

8. Verfahren nach Anspruch 7, wobei der erste spezifische Widerstand zwischen 2% und 15% im Vergleich zu dem zweiten spezifischen Widerstand beträgt.

9. Verfahren nach Anspruch 8, wobei das erste Geliermittel ein vernetztes Polyacrylatpolymer ist.

10. Verfahren nach Anspruch 7, wobei die ersten und zweiten Geliermittel vor dem Vermischen mit dem partikelförmigem Zink miteinander vermengt werden.

11. Verfahren nach Anspruch 7 oder Anspruch 10, wobei die ersten und zweiten Geliermittel vernetzte Polyacrylatpolymere sind.

12. Elektrochemische Zelle, umfassend:
ein zylindrisches Gehäuse, dessen Höhe größer ist als dessen Durchmesser;
einen wässrigen alkalischen Elektrolyten umfassend Kaliumhydroxid;
eine positive Elektrode, die eine Nennspannung von 1,5 Volt und ein aktives Material aufweist, das Mangandioxid umfasst; und
eine negative Elektrode, die partikelförmiges Zink und ein Geliermittelgemisch aufweist, wobei das Geliermittelgemisch ein erstes Geliermittel, das im Wesentlichen aus einem vernetzten Polyacrylatpolymer, zwischen 10 Gew.-% und 50 Gew.-% des Gemischs bereitgestellt, besteht und ein zweites Geliermittel, das im Wesentlichen aus einem vernetzten Polyacrylatpolymer, zwischen 10 Gew.-% und 50 Gew.-% des Gemischs bereitgestellt, besteht, umfasst,
wobei eine Differenz im spezifischen Widerstand des ersten Geliermittels und des zweiten Geliermittels zwischen 2% und 15% beträgt, wobei die Differenz im spezifischen Widerstand individuell für das erste Geliermittel und das zweite Geliermittel gemessen wird, bevor sie gemischt und der Zelle bereitgestellt werden, und die Differenz als eine Funktion des Geliermittels mit geringerem spezifischen Widerstand ausgedrückt wird.

13. Zelle nach Anspruch 12, wobei der wässrige alkalische Elektrolyt eine Kaliumhydroxidkonzentration von 26% aufweist und die Differenz im spezifischen Widerstand des ersten Geliermittels und des zweiten Geliermittels zwischen 9% und 15% beträgt, oder wobei der wässrige alkalische Elektrolyt eine Kaliumhydroxidkonzentration von 30% aufweist und die Differenz im spezifischen Widerstand des ersten Geliermittels und des zweiten Geliermittels zwischen 6% und 12% beträgt, oder wobei der wässrige alkalische Elektrolyt eine Kaliumhydroxidkonzentration von 33% aufweist und die Differenz im spezifischen Widerstand des ersten Geliermittels und des zweiten Geliermittels zwischen 2% und 8% beträgt.

14. Zelle nach Anspruch 12, wobei die ersten und das zweiten Geliermittel nach individueller thermogravimetrischer Analyse vor dem Vermischen und zwischen Umgebungstemperatur und 600 Grad Celsius ähnlich geformte thermogravimetrische Kurven mit 5% oder geringerer Differenz zwischen festgestellten Datenpunkten bei jedweder vorgegebenen Temperatur auf den Kurven aufweisen.

## Revendications

1. Cellule électrochimique comprenant :
un boîtier cylindrique ayant une hauteur supérieure à un diamètre ;
un électrolyte alcalin aqueux ;
une électrode positive ayant une tension nominale de 1,5 volt et un matériau actif comprenant du dioxyde de manganèse ;
une électrode négative comprenant du zinc particulaire et un mélange d'agents gélifiants, ledit mélange d'agents gélifiants comprenant au moins deux composants ayant une différence prédéterminée en termes de résistivité, dans laquelle la résistivité du premier composant est supérieure à la résistivité du second composant, ladite résistivité étant mesurée pour chaque composant avant qu'il soit mélangé ou fourni à la cellule ; et
dans laquelle le premier composant et le second composant sont mélangés selon un rapport du premier composant par rapport au second composant compris entre 10:90 et 50:50 en volume.

2. Cellule selon la revendication 1, dans laquelle la différence en termes de résistivité entre les composants est comprise entre 2 % et 15 %, telle qu'exprimée comme une fonction du composant ayant la plus faible résistivité.

3. Cellule selon la revendication 1 ou la revendication 2, dans laquelle les deux composants sont des polymères polyacrylates réticulés.

4. Cellule selon la revendication 1, dans laquelle au moins l'un des composants comprend un polymère polyacrylate réticulé.

5. Cellule selon la revendication 1, dans laquelle au moins un composant est formé en utilisant un solvant à base de benzène.

6. Cellule selon la revendication 1 ou la revendication 5, dans laquelle au moins un composant est formé en utilisant un solvant exempt de benzène.

7. Procédé de fabrication d'une pile alcaline comprenant :
la sélection d'un premier agent gélifiant ayant une première résistivité ;
la sélection d'un second agent gélifiant ayant une seconde résistivité qui est inférieure à la première résistivité ;
le mélange des premier et second agents gélifiants avec du zinc particulaire pour créer un mélange d'électrode négative, dans lequel les premier et second agents gélifiants sont fournis selon un rapport du premier agent gélifiant par rapport au second agent gélifiant compris entre 10:90 et 50:50 en volume ;
la fourniture d'un électrolyte alcalin aqueux pour créer une électrode négative réticulée ; et
la fourniture d'une électrode positive comprenant du dioxyde de manganèse et le positionnement de l'électrode positive et de l'électrode négative dans un boîtier cylindrique pour former une batterie.

8. Procédé selon la revendication 7, dans lequel la première résistivité est comprise entre 2 % et 15 % par comparaison avec la seconde résistivité.

9. Procédé selon la revendication 8, dans lequel le premier agent gélifiant est un polymère polyacrylate réticulé.

10. Procédé selon la revendication 7, dans lequel les premier et second agents gélifiants sont mélangés ensemble avant le mélange avec le zinc particulaire.

11. Procédé selon la revendication 7 ou la revendication 10, dans lequel les premier et second agents gélifiants sont des polymères polyacrylates réticulés.

12. Cellule électrochimique comprenant :
un boîtier cylindrique ayant une hauteur supérieure à un diamètre ;
un électrolyte alcalin aqueux comprenant de l'hydroxyde de potassium ;
une électrode positive ayant une tension nominale de 1,5 volt et un matériau actif comprenant du dioxyde de manganèse ;
une électrode négative comprenant du zinc particulaire et un mélange d'agents gélifiants, ledit mélange d'agents gélifiants comprenant un premier agent gélifiant constitué essentiellement d'un polymère polyacrylate réticulé fourni entre 10 % en poids et 50 % en poids du mélange et un second agent gélifiant constitué essentiellement d'un polymère polyacrylate réticulé fourni entre 50 % en poids et 90 % en poids du mélange ; et
dans laquelle une différence de résistivité du premier agent gélifiant et du second agent gélifiant est comprise entre environ 2 % et 15 %, ladite différence de résistivité étant mesurée individuellement pour le premier agent gélifiant et le second agent gélifiant avant qu'ils soient mélangés et fournis à la cellule et avec la différence exprimée comme une fonction de l'agent gélifiant ayant la plus faible résistivité.

13. Pile selon la revendication 12, dans laquelle l'électrolyte alcalin aqueux a une concentration en hydroxyde de potassium de 26 % et la différence en termes de résistivité du premier agent gélifiant et du second agent gélifiant est comprise entre 9 % et 15 % ou dans laquelle l'électrolyte alcalin aqueux a une concentration en hydroxyde de potassium de 30 % et la différence en termes de résistivité du premier agent gélifiant et du second agent gélifiant est comprise entre 6 % et 12 % ou dans laquelle l'électrolyte alcalin aqueux a une concentration en hydroxyde de potassium de 33 % et la différence en termes de résistivité du premier agent gélifiant et du second agent gélifiant est comprise entre 2 % et 8 %.

14. Cellule selon la revendication 12, dans laquelle les premier et second agents gélifiants, lors d'une analyse thermogravimétrique individuelle avant le mélange et entre la température ambiante et 600 degrés Celsius, ont des courbes thermogravimétriques de forme similaire avec une différence de 5 % ou moins entre les points de données observés à n'importe quelle température donnée sur les courbes.
